(19) **Europäisches Patentamt**
**European Patent Office**
**Office européen des brevets**

(11) **EP 0 978 178 B1**

(12) **EUROPEAN PATENT SPECIFICATION**

(45) Date of publication and mention
of the grant of the patent:
**30.07.2008 Bulletin 2008/31**

(51) Int Cl.:
***H04L 9/32*** *(2006.01)*

(21) Application number: **98922737.6**

(86) International application number:
**PCT/EP1998/002273**

(22) Date of filing: **16.04.1998**

(87) International publication number:
**WO 1998/049805 (05.11.1998 Gazette 1998/44)**

(54) **KEY DISTRIBUTION SYSTEM**

VORRICHTUNG ZUR SCHLÜSSELVERTEILUNG

SYSTEME DE DISTRIBUTION DE CLES

(84) Designated Contracting States:
**AT BE CH DE DK ES FI FR GB GR IE IT LI LU NL PT SE**

(30) Priority: **25.04.1997 NL 1005912**

(43) Date of publication of application:
**09.02.2000 Bulletin 2000/06**

(73) Proprietor: **Nederlandse Organisatie voor toegepast-natuurwetenschappelijk Onderzoek TNO**
**2628 VK Delft (NL)**

(72) Inventors:
• **QUAK, Jacobus, Theodores, Willem**
**NL-3583 TW Utrecht (NL)**
• **KLEINHUIS, Geert**
**NL-9264 TX Eernewoude (NL)**

• **DE BOER, Marten**
**NL-9285 VD Buitenpost (NL)**

(74) Representative: **Prins, Adrianus Willem et al**
**Vereenigde**
**P.O.Box 87930**
**2508 DH Den Haag (NL)**

(56) References cited:
• **TARDO J J ET AL: "SPX: global authentication using public key certificates" PROCEEDINGS. 1991 IEEE COMPUTER SOCIETY SYMPOSIUM ON RESEARCH IN SECURITY AND PRIVACY (CAT. NO.91CH2986-8), OAKLAND, CA, USA, 20-22 MAY 1991, pages 232-244, XP000220797 ISBN 0-8186-2168-0, 1991, LOS ALAMITOS, CA, USA, IEEE COMPUT. SOC. PRESS, USA**

**Description**

A. BACKGROUND OF THE INVENTION

The invention relates to a key distribution system. Two cryptographic techniques exist for securing electronic communication: secret key systems and public/private (secret) key (PSK) systems. PSK systems are used in particular when the communication partners do not know each other beforehand.

In PSK systems, each user has a private (secret) key (SK) and a thereto related public key (PK). The PKs of the different users are available at a Trusted Third Party (TTP), incorporated in a TTP server (SV). The SK is known only to the user. See for example TARDO J.J.ET AL: "SPX: global authentication using public key certificates" PROCEEDINGS. 1991 IEEE COMPUTER SOCIETY SYMPOSIUM ON RESEARCH IN SECURITY AND PRIVACY (CAT. NO.91CH2986-8), OAKLAND, CA, USA, 20-22 MAY 1991, pages 232-244,.

Assume that a user A and a user B are registered at a server SV1. User A has a secret code, SKa, his public key, PKa, being stored in the server SV1. User B also has a secret key, SKb, his public key also being stored in the server SV1. The server makes certificates of the public user keys PKa, PKb, etc. available to users who ask for them. The certificate of a PK comprises the PK, provided with a digital signature, making use of the SK of the server; such key certificates are hereinafter represented as {PKa}SKsv1, {PKb}SKsv1, etc., where SKsv1 represents the secret key of server SV1. In this way, users can avail themselves of PKs which are certified by means of the digital signature of the TTP server where they are registered, whereby their integrity is guaranteed. By means of the public key of the server, PKsv1, which is made available to every user registered at SV1, user A, for example, can extract PKb from the received key certificate {PKb}SKsv1 (PKb = {{PKb}SKsv1}PKsv1) in order to subsequently encrypt with PKb a message which is to be sent to user B.

Users who are registered at the same TTP server can make use of key certificates which are certified by means of the SK of that same TTP server, for example {PKa}SKsv1, {PKb}SKsv1, (PKc)SKsv1, etc. All users can extract reliable keys, PKa, PKb, PKc, from the received certificates, namely by means of the PK of the server where they are registered. It is different if there are more servers and users who are not registered at the same server. For example, user A is registered at server SV1 and user X at server SV2. In order to send an encrypted message to X which can be deciphered by X with the aid of his SK, SKx, A requires PKx. That is administered by his SV2. A, however, does not have a relationship with SV2. User A requests his own server, SV1, to send him a certificate of PKx. SV1 routes said request to server SV2, which thereupon sends a certificate of PKx, {PKx}SKsv2, to SV1. Said certificate is thus certified by means of the SK of SV2. SV1 sends the certificate, {PKx}SKsv2, to user A. User A, however, does not have the PK of SV2 at its disposal, and therefore can not extract PKx from {PKx}SKsv2. SV1 therefore also sends to A a cross-certificate of SV1 and SV2: {PKsv2}SKsv1. A then uses that, together with PKsv1, to extract PKx from {PKx}SKsv2: PKx = {{(PKx)SKsv2} {PKsv2} SKsv1 PKsv1.

The more servers which need to be accessed to obtain the PK of an "external" user X not registered at the same TTP server, the greater the computational capacity that will required of A to extract (calculate) PKx before being able to communicate with X. For n servers, the PKx is calculated from:

$$PKx = \{\{...\{\{\{PKx\}SKsvn\}PKsvn\}SKsvn\text{-}1\}PKsvn\text{-}1\}SKsvn\text{-}2\}PKsvn\text{-}2\}...\}SKsv1\}PKsv1.$$

It is clear that such a process can require a considerable amount of time.

B. SUMMARY OF THE INVENTION

The invention seeks to bring about an improvement in the above, whereby the speed of communication can be increased considerably, and whereby the computational capacity of the user terminals can be restricted. Further, the application software (and application hardware) of the user can be less sophisticated.

According to the invention, it is provided that in one or more local servers, for example batch-wise, that is, at set times, locally useable certificates are created and stored of public keys of external users not registered at that same local server: re-certification of the PKs of external users. The PKs re-certified in this way are formed by the PKs of said external users, but certified with the SK of the own server SV1: {PKx}SKsv1. Said certificates can then, just as the certificates of the local users, be made available to the local users registered at the SV upon request. From such a certificate, {PKx}SKsv1, the local user can extract the key of an external user X, making use of the public key of his own server, PKsv1. Hereby the user does not need to perform a complex calculation, in the form of PKx = {{...{{{PKx}SKsvn} PKsvn}SKsvn-1}PKsvn-1}SKsvn-2}PKsvn-2}...}SKsv1}PKsv1, but can suffice with the calculation PKx = {{PKx}SKsv1}PKsv1, the same as the calculation for extracting keys of local users.

## C. EXEMPLARY EMBODIMENT

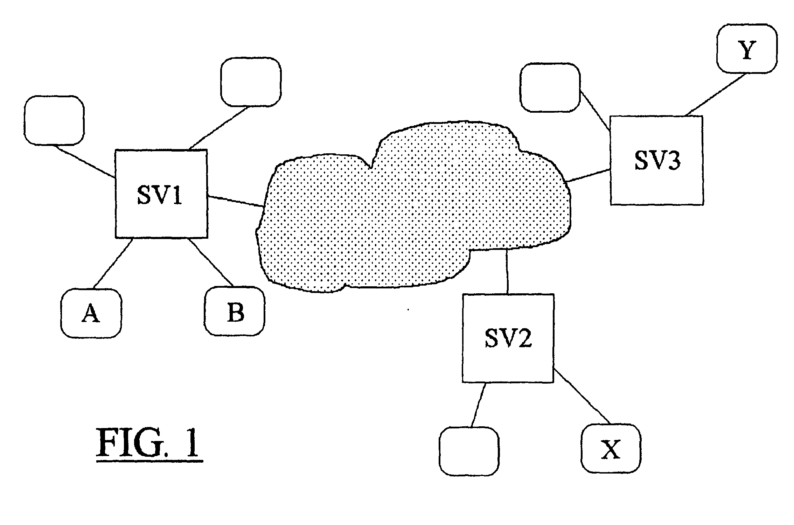

FIG. 1 shows a network with a number of TTP servers SV1, SV2 and SV3. Users A, B, X and Y are connected to the servers. A has a secret key SKa, his public key, PKa, being stored in the server SV1. B has a secret key SKb, his public key also being stored in the server SV1. X has a secret key SKx, his public key PKx being stored in server SV2. Finally, Y has a secret key SKy, his public key, PKy, being stored in server SV3. Certificates of the public user keys PKa and PKb are made available by server SV1, certificates of PKx by server SV2, and certificates of PKy by server SV3. The servers themselves respectively have secret keys SKsv1, SKsv2 and SKsv3, and public keys PKsv1, PKsv2 and PKsv3.

If user A wishes to send a message to user B, user A requires key PKb, so that user B can decipher the received message, which is encrypted with PKb, with the aid of his own private key SKb. A therefore requests the key certificate (PKb)SKsv1 at server SV1. A calculates PKb from the received certificate with the aid of PKsv1:

$$PKb = \{\{PKb\}SKsv1\}PKsv1.$$

According to the prior art, the communication between A and X would take place as follows:

In order to be able to communicate with X, A requires PKx. The certificate thereof, {PKx}SKsv2, is registered in SV2. A requests his own local server SV1 to send him {PKx}SKsv2. SV1 requests said certificate {PKx}SKsv2 from SV2, and sends said certificate on to user A. Since A does not have PKsv2 at its disposal, SV1 also sends a cross-certificate {PKsv2}SKsv1, present in said server, to A. Initially, A already has PKsv1 (i) at its disposal and can now, with the aid of the cross-certificate {PKsv2}SKsv1 (ii) received from SV1, extract PKx from the certificate {PKx}SKsv2 (iii) received via SV1 from SV2: PKx = {{{PKx}SKsv2}(iii) {PKsv2}SKsv1}(ii) PKsv1(i).

The more servers which need to be accessed for obtaining the PK of an external user, the greater the computational capacity which will be required of A. Thus, in communication between user A and user Y, connected to server SV3 (via server SV2), the public key of Y, PKy, must be calculated from: PKy = {{{PKy}SKsv3}(iv) {PKsv3}SKsv2}(iii) {PKsv2}SKsv1}(ii) PKsv1(i). Herein, part (iv) is the certificate of the public key PKy of user Y supplied by server SV3 to server SV2, certified by the secret key of SV3, SKsv3. In this case, two cross-certificates are required in order to enable user A to calculate PKy from {PKy}SKsv3, namely the cross-certificate {PKsv3}SKsv2 (iii) and the cross-certificate (PKsv2)SKsv1 (ii), together with the public key PKsv1 (i) already present at A of its own server SV1. It is clear that such a calculation can require a considerable amount of time. Furthermore, the user software and hardware must be relatively complex.

The invention is based on the insight that re-certifying non-local key certificates by means of cross-certificates can be more expediently performed by the key distribution system, that is to say by the servers, than by the users.

According to the invention, it is provided for that the user does not need to calculate the public key of an external (non-local) user from a series of cross-certificates, but that the key certificates of non-local users also are made available in the same form, namely certified with the same digital signature of the local server, as the key certificates of the local users. It is suggested that making key certificates of non-local users available to local users be offered as service. Such a service allows users to save substantially on the processing possibilities of their local terminals. Further, the administration of the certificates also becomes easier, partly because key changing becomes easier.In the implementation of the suggested service, two options are possible:

1. periodically, locally useable key certificates, re-certified with the SK of the local TTP server, are made batch-wise of the external users or a relevant group thereof;
2. the moment the local user requests it, a locally useable key certificate of the desired external PK, re-certified with the SK of the local server, is generated by the local server.

The advantage of option 1 is that, provided a key certificate has been made of the desired external user, said certificate no longer needs to be generated the moment there is a demand for it. A disadvantage is that many certificates are generated for which there is no or only little demand, while nevertheless storage capacity on the local server is necessary thereto. Further, such files present on the servers must be kept up to date. The advantage of the second option is that the certificates are always "fresh" and that no storage capacity is required for large numbers of certificates. A disadvantage is that the server will only start calculating a requested certificate the moment there is demand for it.

## Claims

1. Key distribution system for distributing public keys via servers (SV1, ...), where users (A, ...) are registered; where key certificates ({PKa}SKsv1, ...) are made available by the servers, said key certificates being public keys (PKa, ...) which are digitally signed with the aid of the secret key (SKsv1) of a server, **<u>characterised in that</u>** a local server (SV1) is adapted to make available to its registered users (A, B) recertified key certificates ({PKx}SKsv1) of users (X, Y) not registered at said local server, said recertified key certificates being public keys (PKx) of non-registered users (X, Y), being digitally signed with the aid of the secret key (SKsv1) of the local server (SV1).

2. System according to Claim 1, **<u>characterised in that</u>** the local server (SV1) is adapted to generate the key certificates ({PKx}SKsv1, {PKy}SKsv1) of users (X, Y), not registered at said server (SV1), at moments which are independent of the moments at which users (A, B, ...) registered at said local server (SV1), request such key certificates.

3. System according to Claim 1, **<u>characterised in that</u>** the local server (SV1) is adapted to generate the key certificate ({PKx}SKsv1) of a user (X) not registered at said server (SV1) as soon as a registered user (A, B, ...) requests said key certificate.

## Patentansprüche

1. Schlüsselverteilungssystem zum Verteilen öffentlicher Schlüssel über Server (SV1, ...), bei denen Benutzer (A, ...) registriert sind, wobei von den Servern Schlüsselzertifikate ((PKa)SKsv1, ...) zur Verfügung,gestellt werden, wobei die Schlüsselzertifikate öffentliche Schlüssel (Pka, ...) sind, die mit Hilfe des geheimen Schlüssels (SKsv1) eines Servers digital signiert sind, **dadurch gekennzeichnet, dass** ein lokaler Server (SV1) dazu angepasst ist, seinen registrierten Benutzern (A, B) rezertifizierte Schlüsselzertifikate ((PKx)SKsv1) von Benutzern (X, Y), die nicht bei dem lokalen Server registriert sind, zur Verfügung zu stellen, wobei die rezertifizierten Schlüsselzertifikate öffentliche Schlüssel (PKx) von nicht registrierten Benutzern (X, Y) sind, die mit Hilfe des geheimen Schlüssels (SKsv1) des lokalen Servers (sv1) digital signiert sind.

2. System nach Anspruch 1, **dadurch gekennzeichnet, dass** der lokale Server (SV1) dazu angepasst ist, die Schlüsselzertifikate ((PKx)SKsv1), (PKy)SKsv1) von Benutzern (X, Y), die nicht bei dem Server (SV1) registriert sind, zu Zeitpunkten zu generieren, die unabhängig von den Zeitpunkten sind, zu denen bei dem lokalen Server (SV1) registrierte Benutzer (A, B, ...) solche Schlüsselzertifikate anfordern.

3. System nach Anspruch 1, **dadurch gekennzeichnet, dass** der lokale Server (SV1) dazu angepasst ist, die Schlüsselzertifikate ((PKx)SKsv1) eines bei dem Server (SV1) nicht registrierten Benutzer (X) zu generieren, sobald ein registrierter Benutzer (A, B...) das Schlüsselzertifikat anfordert.

## Revendications

1. Système de distribution de clés pour distribuer des clés publiques via des serveurs (SV1, ...) où sont inscrits des utilisateurs (A, ...), dans lequel des certificats de clés ((PKa)SKsv1, ...) sont mis à disposition par les serveurs, lesdits certificats de clés étant des clés publiques (PKa, ...) signées numériquement à l'aide de la clé secrète (SKsv1) d'un serveur, **<u>caractérisé</u> en ce qu'**un serveur local (SV1) est apte à rendre disponible à ses utilisateurs inscrits (A, B) des certificats de clés recertifiées ((PKx)SKsv1) d'utilisateurs (X, Y) non inscrits sur ledit serveur local, lesdits certificats de clés recertifiées étant des clés publiques (PKx) d'utilisateurs non inscrits (X, Y) signées numériquement à l'aide de la clé secrète (SKsv1) du serveur local (SV1).

2. Système selon la revendication 1, **caractérisé en ce que** le serveur local (SV1) est apte à générer les certificats de clés ((PKx)SKsv1, (PKy)SKsv1) d'utilisateurs (X, Y) non inscrits sur ledit serveur (SV1) à des moments qui sont indépendants des moments auxquels les utilisateurs (A, B, ...) inscrits sur ledit serveur local (SV1) demandent ces certificats de clés.

3. Système selon la revendication 1, **caractérisé en ce que** le serveur local (SV1) est apte à générer le certificat de clé ((PKx)SKsv1) d'un utilisateur (X) non inscrit sur ledit serveur (SV1) dès qu'un utilisateur inscrit (A, B, ...) demande ledit certificat de clé.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **TARDO J.J. et al.** SPX: global authentication using public key certificates. *PROCEEDINGS. 1991 IEEE COMPUTER SOCIETY SYMPOSIUM ON RESEARCH IN SECURITY AND PRIVACY,* 20 May 1991, 232-244